# EUROPEAN PATENT APPLICATION

(11) **EP 4 528 497 A1**
(43) Date of publication of application: **26.03.2025**
(21) Application number: 23887973.8
(22) Date of filing: 07.11.2023
(51) Int. Cl.: G06F 9/451

(54) **PAGE DISPLAY METHOD AND APPARATUS, DEVICE, STORAGE MEDIUM, AND PROGRAM PRODUCT**

(30) Priority: 07.11.2022 CN 202211387621
(71) Applicant: Beijing Zitiao Network Technology Co., Ltd., Beijing 100190 (CN)
(72) Inventor: YANG, Pei, Beijing 100028 (CN)
(74) Representative: Williams, Michael David
(86) International application number: PCT/CN2023/130049
(87) International publication number: WO 2024/099284

(57) **Abstract**

Provided in the embodiments of the present disclosure are a page display method and apparatus, a device, a storage medium and a program product. The method comprises: receiving a first search operation for first information to be searched for, said information being associated with a target event, and the target event comprising a preset event and/or a target sub-event of the preset event; and, in response to the first search operation, displaying a first search result in a search result page, displaying a first page area of the search result page as a first page background, and displaying a second page area of the search result page as a second page background. The method can display a first page area of a search result page as a first page background, and display a second page area of the search result page as a second page background, thereby enriching the background display of search result pages.

## Description

The application claims priority to the Chinese patent application No. 202211387621.0, filed November 7, 2022, the entire disclosure of which is incorporated herein by reference as part of the present application.

### TECHNICAL FIELD

Embodiments of the present disclosure relate to a method and an apparatus of page displaying, a device, a storage medium and a program product.

### BACKGROUND

At present, more and more video application programs have emerged. In the video application programs, a user may search for information of interest to display the search results on a page.

A display mode of a page background in the existing method of page displaying is relatively monotonous.

### SUMMARY

Embodiments of the present disclosure provide a method and an apparatus of page displaying, a device, a storage medium and a program product, to enrich background exhibition of a search results page.

In a first aspect, embodiments of the present disclosure provide a method of page displaying, including:
receiving a first search operation for first information to be searched, wherein the first information to be searched is associated with a target event, and the target event includes a preset event and/or a target sub-event of the preset event;
in response to the first search operation, displaying a first search result on a search results page, displaying a first page region of the search results page as a first page background, and displaying a second page region of the search results page as a second page background, wherein the first search result matches the first information to be searched.

In a second aspect, embodiments of the present disclosure further provide an apparatus of page displaying, including:
a receiving module, configured to receive a first search operation for first information to be searched, wherein the first information to be searched is associated with a target event, and the target event includes a preset event and/or a target sub-event of the preset event; and
a responding module, configured to in response to the first search operation, display a first search result on a search results page, display a first page region of the search results page as a first page background, and display a second page region of the search results page as a second page background, wherein the first search result matches the first information to be searched.

In a third aspect, embodiments of the present disclosure provide an electronic device, including:
one or more processors; and
a memory, storing one or more programs.

When the one or more programs is executed by the one or more processors, the one or more processors implement the method of page displaying of the embodiments of the present disclosure.

In a fourth aspect, embodiments of the present disclosure further provide provides a computer readable storage medium. The computer readable storage medium has computer programs stored thereon, and the computer programs, when executed by a processor, implement the method of page displaying of the embodiments of the present disclosure.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1 is a schematic flow chart of a method of page displaying provided by an embodiment of the present disclosure;
Fig. 2 is a schematic diagram of a search results page provided by an embodiment of the present disclosure;
Fig. 3 is a schematic flow chart of a method of page displaying provided by an embodiment of the present disclosure;
Fig. 4 is a schematic diagram of a search results page provided by an embodiment of the present disclosure;
Fig. 5 is a schematic diagram of a search results page provided by an embodiment of the present disclosure;
Fig. 6 is a flow chart of an apparatus of page displaying provided by an embodiment of the present disclosure; and
Fig. 7 is a structural schematic diagram of an electronic device provided by an embodiment of the present disclosure.

### DETAILED DESCRIPTION

Embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this regard.

The terms "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". The relevant definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more."

The names of messages or information exchanged between a plurality of apparatuses in the implementations of the present disclosure are used for illustrative purposes only and are not used to limit the scope of these messages or information.

It is understandable that before the technical solutions disclosed in the embodiments of the present disclosure are used, the types, scope of use, usage scenarios, and the like of personal information involved in the present disclosure shall be informed to users and the users' authorization shall be obtained through appropriate means in accordance with relevant laws and regulations.

For example, when receiving an active request from a user, a prompt message is sent to the user to explicitly prompt the user that the operation requested by the user will need to obtain and use the user's personal information. Therefore, the user can voluntarily choose whether to provide personal information to a software or hardware such as an electronic device, an application, a server, or a storage medium that performs an operation of the technical solution of the present disclosure based on the prompt information.

As an optional but non-restrictive implementation, in response to receiving an active request from a user, the manner of sending a prompt message to the user may be, for example, a pop-up window, and the prompt message may be presented in the pop-up window in text. In addition, the pop-up window may also carry a selection control for the user to select "agree" or "disagree" to provide personal information to the electronic device.

It is understandable that the above process of notifying and obtaining the user authorization is only illustrative and does not constitute a limitation on the implementation of the present disclosure. Other manners that comply with relevant laws and regulations may also be applied to the implementation of the present disclosure.

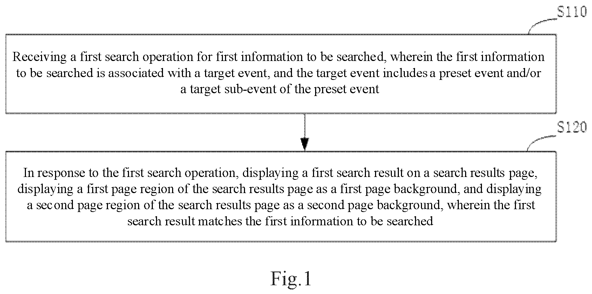

Fig. 1 is a schematic flow chart of a method of page displaying provided by an embodiment of the present disclosure. The method may be executed by an apparatus of page displaying; wherein the apparatus may be implemented by software and/or hardware, and may be configured in an electronic device, for example, may be configured in a mobile phone or a tablet personal computer. The method of page displaying provided by the embodiment of the present disclosure is applicable to a scenario where a page is displayed. As shown in Fig. 1, the method of page displaying provided by this embodiment may include:
S110: receiving a first search operation for first information to be searched, wherein the first information to be searched is associated with a target event, and the target event includes a preset event and/or a target sub-event of the preset event.

The first information to be searched may refer to a keyword of information that a user wants to search for, for example, the first information to be searched may be associated with the target event. The target event may include the preset event and/or the target sub-event of the preset event. The preset event may be understood as an event set in advance, for example, a certain type of event that occurs at preset time or any time; the target sub-event may be considered as a certain event in the preset event; optionally, the preset event may be a competition event, for example, the World Cup or other competition event, etc.; and the target sub-event of the preset event may refer to a certain game in the preset event, for example, a certain game in the World Cup.

The first search operation may refer to an operation of searching for the first information to be searched, for example, the first search operation may be an operation of triggering click on a certain button on a page, or an operation of clicking enter in an input box for inputting the first information to be searched.

In the step, firstly, the first search operation for the first information to be searched may be received to display a corresponding search content. A method of receiving the first search operation will not be limited, for example, a search button may be set in a terminal device to receive the first search operation after the user clicks the search button; or a search button may also be set within an application program to receive the first search operation after the user clicks the search button; or the first search operation for searching information may also be defined within an application program, so that the terminal device may receive the first search operation for the first information to be searched, after the user performs the first search operation within the application program.

S120: displaying a first search result on a search results page, in response to the first search operation, displaying a first page region of the search results page as a first page background, and displaying a second page region of the search results page as a second page background, wherein the first search result matches the first information to be searched.

In this embodiment, the search results page may refer to a page that displays the first search result; the first search result is a search result corresponding to the first search operation, that is, the first search result matches the first information to be searched; and a specific content of the first search result will not be limited and may be determined according to actual contents of the first information to be searched.

The first page region may be considered as a certain region of the search results page, and is used for displaying as the first page background; the first page background is just a background of the first page region; a specific content of the first page background will not be limited and may be set by relevant personnel according to actual situations; the second page region may be considered as a certain region of the search results page, and is used for displaying as a second page background; the second page background is just a background of the second page region, and a specific content thereof will not be limited and may also be set by relevant personnel according to actual situations. In this embodiment, specific positions of the second page region and the first page region are different from each other; for example, the first page region may be a top region of the search results page, and the second page region may be a bottom region of the search results page.

Specifically, after receiving the first search operation for the first information to be searched, in response to the first search operation, the first search result may be displayed on the search results page; the first page region of the search results page may be displayed as the first page background, and the second page region of the search results page may be displayed as the second page background, to complete display of the first search result. The page background in the vicinity of junction between the first page region and the second page region will not be limited in the step, for example, a junction line between the first page region and the second page region may be taken as a dividing line, and the first page background and the second page background that are different from each other may be displayed on both sides of the dividing line; the page background in the vicinity of the junction between the first page region and the second page region may also be displayed in gradient color, that is, the page background in the vicinity of the junction between the first page region and the second page region gradually changes from the first page background to the second page background.

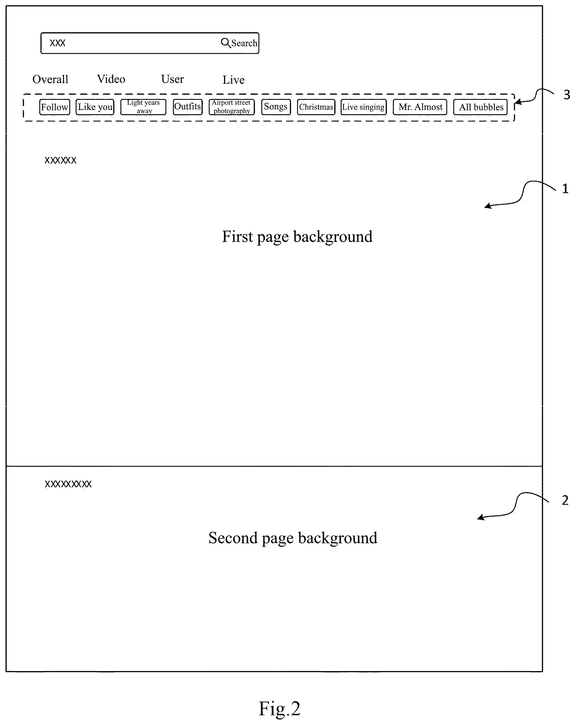

Fig. 2 is a schematic diagram of a search results page provided by an embodiment of the present disclosure; as shown in Fig. 2, a first search result (not shown in Fig. 2) may be displayed on the search results page; a first page region 1 of the search results page is displayed as the first page background; and a second page region 2 of the search results page is displayed as the second page background.

The embodiment of the present disclosure provides the method of page displaying, receiving the first search operation for the first information to be searched, wherein the first information to be searched is associated with the target event, and the target event includes the preset event and/or the target sub-event of the preset event; in response to the first search operation, displaying the first search result on the search results page, displaying the first page region of the search results page as the first page background, and displaying the second page region of the search results page as the second page background, wherein the first search result matches the first information to be searched. By using the method, in response to the first search operation, the first search result may be displayed on the search results page the first page region of the search results page may be displayed as the first page background, and the second page region of the search results page may be displayed as the second page background, thereby enriching background exhibition of the search results page.

In one embodiment, the search results page further displays a preset page component; and a component background of the preset page component is associated with a page background in a current display position of the preset page component.

The preset page component may refer to a preset component and is displayed within the search results page, for example, the preset page component may be a theme component of the search results; and different theme components are used for triggering display of search results associated with different themes. The component background may be understood as a background of the preset page component.

In one implementation, the component background of the preset page component may be associated with the page background in the current display position of the preset page component; for example, the component background of the preset page component may be the same as the page background in the current display position of the preset page component at a current moment, and change with the change of the page background in the display position of the preset page component.

As shown in Fig. 2, the search results page further displays a preset page component 3; a component background of the preset page component 3 is associated with a page background in a current display position of preset page component 3 at the current moment; for example, an actual component background of the preset page component 3 is obtained, based on fusion of the page background in the current display position and the preset component background of the preset page component 3.

In one embodiment, the method further includes:
in response to a page content switch operation controlling the first search result and the page background of the search results page to move, and updating the component background of the preset page component based on the page background in the current display position of the preset page component, wherein the display position of the preset page component on the screen remains unchanged.

The page content switch operation may be considered as an operation of switching a page content, for example, the page content switch operation may be an operation of sliding the page up or down.

It may be considered that when the user executes the page content switch operation, in response to the page content switch operation, the application program or the electronic device may control the first search result and the page background of the search results page to move and at the same time, update the component background of the preset page component based on the page background in the current display position of the preset page component. The display position of the preset page component on the screen remains unchanged. Exemplarily, the first search result may be controlled moving along with the page content switch operation; the page background of the search results page may also be controlled moving based on the page content switch operation; and meanwhile, the component background of the preset page component may be updated according to the page background in the current display position of the preset page component.

In one embodiment, the displaying a first page region of the search results page as a first page background, and displaying a second page region of the search results page as a second page background, includes:
Overlaying a target background layer on top of an original background layer of the search results page, wherein the second page background is displayed within the original background layer, the first page background is displayed within the target background layer, and a size of the target background layer fits a size of the first page region.

The original background layer may be considered as an original layer of the search results page, for example, the original background layer may be a monochrome layer. The target background layer may be considered as a layer to be overlaid on the original background layer, for example, the target background layer may be a monochrome layer, or may also be at least two background layers overlaid; and the size of the target background layer may fit the size of the first page region.

In this embodiment, the target background layer may be overlaid on top of the original background layer of the search results page, the second page background may be displayed within the original background layer, and the first page background may be displayed within the target background layer, so that the first page region of the search results page is displayed as the first page background and the second page region of the search results page is displayed as the second page background.

In one embodiment, the target background layer includes a first background layer and a second background layer; and the overlaying a target background layer on top of an original background layer of the search results page, includes:
Overlaying the first background layer on top of the original background layer of the search results page, and overlaying the second background layer on top of the first background layer, wherein the first background layer and the second background layer display different background colors, a size of the first background layer fits the size of the first page region, and a size of the second background layer is less than or equal to the size of the first background layer.

In one embodiment, the target background layer may include the first background layer and the second background layer, the first background layer and the second background layer may display different background colors; the sizes of the first background layer and the second background layer will not be limited, for example, the size of the first background layer may fit the size of the first page region, that is, the size of the first background layer may be equal to the size of the first page region, and the size of the second background layer may be less than or equal to the size of the first background layer. Exemplarily, the size of the first background layer may change with the change of the size of the first region, and the size of the second background layer may be a preset size.

Optionally, an upper boundary of the second background layer may coincide with an upper boundary of the first background layer, and center points of the upper boundaries may coincide with each other. A background color in the vicinity of junction between the first background layer and the second background layer may be displayed in gradient color.

Specifically, the first background layer may be overlaid on top of the original background layer of the search results page, and the second background layer may be overlaid on top of the first background layer, so that the first page region of the search results page is displayed as the first page background, and the second page region is displayed as the second page background. Based on this, different page regions of the search results page are displayed as different backgrounds, which achieves an atmosphere sense of the search results page.

In one embodiment, the method further includes:
in response to a second search operation for second information to be searched, displaying a second search result on the search results page, and displaying the search results page as the second page background, wherein the second information to be searched is different from the first information to be searched, and the second search result matches the second information to be searched.

It should be noted that the second information to be searched may refer to a keyword of information that the user wants to search for; wherein a content of the second information to be searched is different from a content of the first information to be searched, that is, the second information to be searched is not related to the target event, the specific content of the second information to be searched will not be limited in this embodiment; and the second search result may refer to a result that matches the second information to be searched. The second search operation may be considered as an operation of searching for the second information to be searched, for example, the second search operation may be an operation of triggering click on a certain button on the page.

In the step, in response to the second search operation for the second information to be searched, the second search result may be displayed on the search results page, and the search results page may be displayed as the second page background. Based on this, corresponding search results may be displayed on the search results page for different information to be searched, and the search results page may be displayed as different page backgrounds.

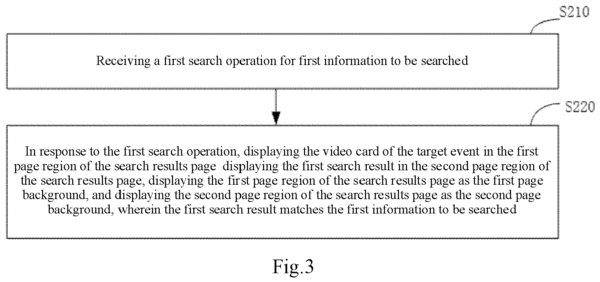

Fig. 3 is a schematic flow chart of a method of page displaying provided by an embodiment of the present disclosure. Solution in this embodiment may be combined with one or more optional solutions in the above-described embodiments. Optionally, the displaying a first search result on a search results page is further specified as: displaying a video card of the target event in the first page region of the search results page, and displaying the first search result in the second page region of the search results page.

The above-described embodiment may be referred to for non-detailed contents of this embodiment.

As shown in Fig. 3, the method includes:
S210: receiving a first search operation for first information to be searched.
S220: in response to the first search operation, displaying the video card of the target event in the first page region of the search results page displaying the first search result in the second page region of the search results page, displaying the first page region of the search results page as the first page background, and displaying the second page region of the search results page as the second page background, wherein the first search result matches the first information to be searched.

The video card may be considered as a video window related to the target event, and is used for playing a video related to the target event. Specifically, after receiving the first search operation for the first information to be searched, the video card of the target event may be displayed in the first page region of the search results page, and the first search result may be displayed in the second page region of the search results page.

Optionally, the first page region may be from the top of the search results page to the bottom of the video card; and the second page region may be a region in the search results page except the first page region.

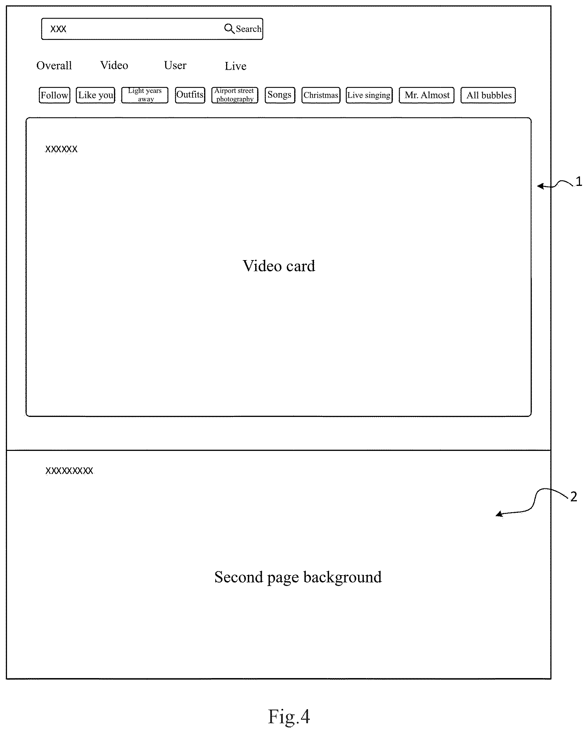

Fig. 4 is a schematic diagram of a search results page provided by an embodiment of the present disclosure; as shown in Fig. 4, the video card of the target event may be displayed in the first page region 1 of the search results page, the first search result may be displayed in the second page region 2 of the search results page; and meanwhile, the first page region 1 of the search results page may be displayed as the first page background, and the second page region 2 of the search results page may be displayed as the second page background.

The embodiment of the present disclosure provides the method of page displaying, by displaying the video card of the target event in the first page region of the search results page, and displaying the first search result in the second page region of the search results page, contents related to the target event in different regions of the search results page are respectively displayed, which enriches exhibition of the search results page.

In one embodiment, a width of the first page region is associated with a width of the search results page; and a height of the first page region is associated with a height of the video card.

It may be considered that the width of the first page region may be associated with the width of the search results page, for example, the width of the first page region may be the same as a display width of the search results page at the current moment, and then change with the change of the display width of the search results page; the height of the first page region may be associated with the height of the video card, for example, the height of the first page region may be the height of the video card in the search results page plus a preset height, and change with the change of the height of the video card; and the preset height may be set according to actual situations, which will not be limited in this embodiment.

In one embodiment, the displaying the video card of the target event in the first page region of the search results page, includes:
Displaying the video card of the target event in the first page region of the search results page, and playing a target video in a first card region of the video card, wherein the target video corresponds to event state information of the target event.

The first card region may refer to a certain region in the video card, and is used for playing the target video. A specific position and a size of the first card region may be determined according to an actual size of the video card; the target video may be considered as a related video of the target event, for example, the target video may correspond to the event state information of the target event; and the event state information may be used for representing a state of the target event.

In one implementation, if the target event is a preset event, then when the state of the preset event is a pre-game state, the target video may be an important video of a pre-game preset event; when the state of the preset event is an in-game state, the target video may be a live video or an important video of an in-game preset event; and when the state of the preset event is a post-game state, the target video may be a live replay of the last game.

In one implementation, if the target event is a preset event of a certain game, then before the game, the target video may be a pre-game live countdown video or associated video (e.g., game information, etc.); in the game, the target video may be a live video of the game; and after the game, the target video may be game live replay or a game highlight video.

Specifically, when displaying the video card of the target event in the first page region of the search results page, the video card of the target event may be displayed in the first page region of the search results page, and the target video may be played in the first card region of the video card.

In one embodiment, the video card includes at least one of a second card region, a third card region, and a fourth card region; the second card region is used for exhibiting sub-event state information of at least one sub-event in the preset event; the third card region is used for exhibiting object information of at least one associated object of the preset event; and the fourth card region is used for exhibiting associated prompt information of the target event.

The second card region may refer to a certain region in the video card, and is used for exhibiting sub-event state information of at least one sub-event in the preset event; the sub-event may be a certain event in the preset event, for example, a round of game; the sub-event state information is just state information of the sub-event, for example, pre-game state information, in-game state information, and post-game state information, and may further include information such as names of both parties in the game, game results, and/or time and the number of games, which may be exhibited before the preset game ends.

The third card region may refer to a certain region in the video card, and is used for exhibiting object information of at least one associated object of the preset event; and optionally, the object may be a person or other object, for example, an item, etc. The associated object may refer to an object related to the preset event, for example, a winner. The object information may be information used for representing the associated object, for example, an object image, etc. Exemplarily, the third card region may be used for exhibiting personnel information of a winner in the preset game, for example, character images, honors and/or teams they belong to.

The fourth card region may refer to a certain region in the video card, and is used for exhibiting the associated prompt information of the target event; and the associated prompt information may be understood as prompt information associated with the target event, for example, game result information, etc. of the target event.

In one implementation, the associated prompt information may be related to the event state information of the target event, for example, when the target event is a certain game, the associated prompt information may be associated with a live state of a game schedule. When there is a replay video viewed, the associated prompt information may be "View live replay"; and when there is no replay video, the associated prompt information may be "View details" for viewing other game highlights or a text-version game schedule details page.

In one implementation, if there are a plurality of pieces of associated prompt information, the respective pieces of associated prompt information may be exhibited in the fourth card region in a switched manner.

In this embodiment, specific positions and sizes of the second card region, the third card region, and the fourth card region in the video card will not be limited and may be set by relevant personnel.

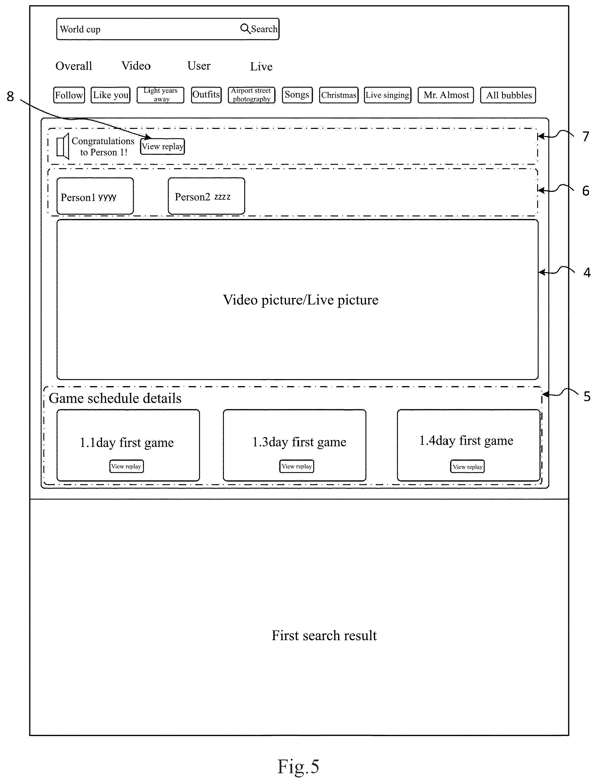

Fig. 5 is a schematic diagram of a search results page provided by an embodiment of the present disclosure; as shown in Fig. 5, a video card of a World Cup Competition (i.e., the target event) is displayed in a first page region 1 of the search results page, and a video picture/live picture (i.e., the target video) is played in a first card region 4 of the video card; meanwhile, the video card further includes a second card region 5, a third card region 6, and a fourth card region 7, and the second card region 5 may be used for exhibiting schedule information of a plurality of games in the World Cup Competition (i.e., sub-event state information of at least one sub-event); the third card region 6 may exhibit information of at least one game participant (i.e. object information of at least one associated object); the fourth card region 7 may exhibit associated prompt information of the game, for example, "Congratulations to Person 1! View replay". In one implementation, a corresponding video may be displayed and played by triggering a control 8 (i.e. View replay).

In one embodiment, after the displaying the video card of the target event in the first page region of the search results page, the method further includes at least one of the following:
Displaying live information of the target sub-event corresponding to the target sub-event state information, in response to a trigger operation for the target sub-event state information;
Displaying object details of a target associated object corresponding to target object information, in response to a trigger operation for the target object information.

The target sub-event state information may refer to a certain piece of sub-event state information triggered by the user, and the target sub-event is just a sub-event corresponding to the target sub-event state information; the target object information may refer to a certain piece of object information triggered by the user, and a target associated object is just object information corresponding to the target object information; the trigger operation is just an operation of triggering a certain piece of information, for example, the trigger operation may be an operation of clicking a certain piece of sub-event state information.

In one embodiment, after displaying the video card of the target event in the first page region of the search results page, the live information of the target sub-event corresponding to the target sub-event state information may be displayed in response to the trigger operation for the target sub-event state information; the live information may be information related to live broadcast of the target sub-event; optionally, the live information may correspond to the event state information of the target sub-event, for example, the live information may be pre-game live countdown, or may also be an in-game live picture, or may also be post-game live replay.

In one embodiment, after displaying the video card of the target event in the first page region of the search results page, the object details of the target associated object corresponding to the target object information may also be displayed in response to the trigger operation for the target object information; for example, when the user clicks a certain piece of object information (i.e., the target object information) of the preset event exhibited in the third card region of the video card, the electronic device may display the object details of the associated object corresponding to the target object information, in response to the trigger operation for the target object information.

In one embodiment, the object information includes an object image, and after the displaying the video card of the target event in the first page region of the search results page, the method further includes:
Adjusting a display size of the target object image, in response to a trigger operation of moving a cursor into a display region where the target object image is located.

The target object image may refer to an object image of a certain associated object; it may be considered that after displaying the video card of the target event in the first page region of the search results page, the display size of the target object image may be adjusted, in response to the trigger operation of moving the cursor into the display region where the target object image is located; the method of adjustment may be, for example, increasing, decreasing, or scaling for the preset number of times according to a preset frequency; the preset frequency and the preset number of times may be set by relevant personnel, and will not be further elaborated here.

From the above description, it may be found that, by the method of page displaying provided by this embodiment, the video card of the preset event may be inserted in the first position of the search results page; a function of configuring a background skin is added to implement an underlying capability used for overlaying two layers; meanwhile, the background skin supports dark and light colors, for example, the search results page may have a dark color mode and a light color mode, the search results page may display a dark or light background color, and adapt all components to the current background color; and design of a plurality of new modules is added, etc.

Firstly, by adding the function of configuring the background skin, the search results page may be a static or dynamic resident page in normal conditions; in a case where the user slides up the page, an ambient color (i.e. the first page background) may disappear, gradually evolving into a generic background color (i.e., the second page background), after a plurality of pixels are controlled sliding up; and in a case where the user slides down the page, the ambient color may be exhibited again when sliding down to the top position.

Then, all generic components are adaptable to the current background color for flexible color changing processing.

Secondly, the design of a plurality of new modules is added, for example, honor moment (e.g., exhibiting information about winners in the third card region), ticker (e.g., exhibiting associated prompt information in the fourth card region), and associated game schedule exhibition (e.g., exhibiting sub-event state information in the second card region), etc. With respect to the design of honor moment, when the mouse hovers over the display region where the target object image is located, the size of the object image may be changed (i.e., adjusting the display size of the target object image).

Finally, the first card (i.e., the video card) design may exhibit first card component design of different pages according to progress of different games, and is adaptable to dark and light colors.

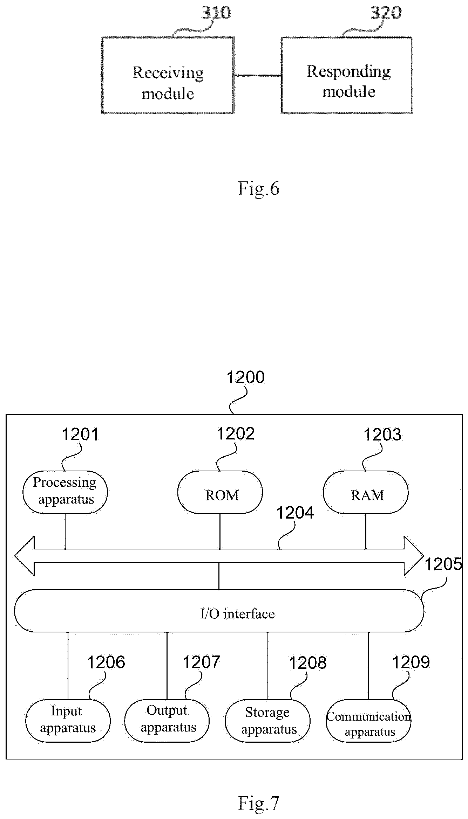

Fig. 6 is a flow chart of an apparatus of page displaying provided by an embodiment of the present disclosure; and as shown in Fig. 6, the apparatus of page displaying provided by this embodiment may include:
A receiving module 310, configured to receive a first search operation for first information to be searched, wherein the first information to be searched is associated with a target event, and the target event includes a preset event and/or a target sub-event of the preset event;
A responding module 320, configured to in response to the first search operation, display a first search result on a search results page, display a first page region of the search results page as a first page background, and display a second page region of the search results page as a second page background, wherein the first search result matches the first information to be searched.

The apparatus of page displaying provided by the embodiment of the present disclosure, receives the first search operation for the first information to be searched through the receiving module 310, wherein the first information to be searched is associated with the target event, and the target event includes the preset event and/or the target sub-event of the preset event; in response to the first search operation, displays the first search result on the search results page, displays a first page region of the search results page as the first page background, and displays the second page region of the search results page as the second page background through the responding module 320, wherein the first search result matches the first information to be searched. In response to the first search operation, the apparatus is capable of displaying the first search result on the search results page, displaying the first page region of the search results page as the first page background, and displaying the second page region of the search results page as the second page background, thereby enriching background exhibition of the search results page.

Optionally, the responding module 320 includes:
A display unit, configured to display a video card of the target event in the first page region of the search results page, and display the first search result in the second page region of the search results page.

Optionally, a width of the first page region is associated with a width of the search results page; and a height of the first page region is associated with a height of the video card.

Optionally, the display unit is specifically configured to:
Display the video card of the target event in the first page region of the search results page, and play a target video in a first card region of the video card, wherein the target video corresponds to event state information of the target event.

Optionally, the video card includes at least one of a second card region, a third card region, and a fourth card region; the second card region is used for exhibiting sub-event state information of at least one sub-event in the preset event; the third card region is used for exhibiting object information of at least one associated object of the preset event; and the fourth card region is used for exhibiting associated prompt information of the target event.

Optionally, the responding module 320 further includes at least one of the following:
A first responding unit, configured to display live information of the target sub-event corresponding to the target sub-event state information, in response to a trigger operation for the target sub-event state information, after displaying the video card of the target event in the first page region of the search results page;
A second responding unit, configured to display object details of a target associated object corresponding to target object information, in response to a trigger operation for the target object information, after displaying the video card of the target event in the first page region of the search results page.

Optionally, the object information includes an object image, and the responding module 320 further includes:
A third responding unit, configured to adjust a display size of the target object image, in response to a trigger operation of moving a cursor into a display region where the target object image is located, after displaying the video card of the target event in the first page region of the search results page.

Optionally, the search results page further displays a preset page component; and a component background of the preset page component is associated with a page background in a current display position of the preset page component.

Optionally, the apparatus of page displaying provided by this embodiment further includes:
A control module, configured to in response to a page content switch operation control the first search result and the page background of the search results page to move, and update the component background of the preset page component based on the page background in the current display position of the preset page component, wherein the display position of the preset page component on the screen remains unchanged.

Optionally, the responding module 320 includes:
An overlaying unit, configured to overlay a target background layer on top of an original background layer of the search results page, wherein the second page background is displayed within the original background layer, the first page background is displayed within the target background layer, and a size of the target background layer fits a size of the first page region.

Optionally, the target background layer includes a first background layer and a second background layer; and the overlaying unit is specifically configured to:
Overlay the first background layer on top of the original background layer of the search results page, and overlay the second background layer on top of the first background layer, wherein the first background layer and the second background layer display different background colors, a size of the first background layer fits the size of the first page region, and a size of the second background layer is less than or equal to the size of the first background layer.

Optionally, the apparatus of page displaying provided by this embodiment further includes:
A display module, configured to in response to a second search operation for second information to be searched, display a second search result on the search results page, and display the search results page as the second page background, wherein the second information to be searched is different from the first information to be searched, and the second search result matches the second information to be searched.

The apparatus of page displaying provided by the embodiment of the present disclosure may execute the method of page displaying provided by any embodiment of the present disclosure, and has corresponding functional modules and advantageous effects for executing the method of page displaying. The method of page displaying provided by any embodiment of the present disclosure may be referred to for technical details not described in detail in this embodiment.

Referring to Fig. 7, Fig. 7 illustrates a schematic structural diagram of an electronic device 1200 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 7 is merely an example, and should not pose any limitation to the functions and the range of use of the embodiments of the present disclosure.

As illustrated in Fig. 7, the electronic device 1200 may include a processing apparatus 1201 (e.g., a central processing unit, a graphics processing unit, etc.), which can perform various suitable actions and processing according to a program stored in a read-only memory (ROM) 1202 or a program loaded from a storage apparatus 1208 into a random-access memory (RAM) 1203. The RAM 1203 further stores various programs and data required for operations of the electronic device 1200. The processing apparatus 1201, the ROM 1202, and the RAM 1203 are interconnected by means of a bus 1204. An input/output (I/O) interface 1205 is also connected to the bus 1204.

Usually, the following apparatus may be connected to the I/O interface 1205: an input apparatus 1206 including, for example, a touch screen, a touch pad, a keyboard, a mouse, a camera, a microphone, an accelerometer, a gyroscope, or the like; an output apparatus 1207 including, for example, a liquid crystal display (LCD), a loudspeaker, a vibrator, or the like; a storage apparatus 1208 including, for example, a magnetic tape, a hard disk, or the like; and a communication apparatus 1209. The communication apparatus 1209 may allow the electronic device 1200 to be in wireless or wired communication with other devices to exchange data. While Fig. 7 illustrates the electronic device 1200 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1209 and installed, or may be installed from the storage apparatus 1208, or may be installed from the ROM 1202. When the computer program is executed by the processing apparatus 1201, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-described computer-readable medium may be included in the above-described electronic device; or may also exist alone without being assembled into the electronic device.

The above-described computer-readable medium carries one or more programs, and when the above-described one or more programs are executed by the electronic device, the electronic device is cause to: receive a first search operation for first information to be searched, wherein the first information to be searched is associated with a target event, and the target event includes a preset event and/or a target sub-event of the preset event; and in response to the first search operation, display a first search result on a search results page, display a first page region of the search results page as a first page background, and display a second page region of the search results page as a second page background, wherein the first search result matches the first information to be searched.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, example 1 provides a method of page displaying, including:
receiving a first search operation for first information to be searched, wherein the first information to be searched is associated with a target event, and the target event includes a preset event and/or a target sub-event of the preset event;
in response to the first search operation, displaying a first search result on a search results page, displaying a first page region of the search results page as a first page background, and displaying a second page region of the search results page as a second page background, wherein the first search result matches the first information to be searched.

According to one or more embodiments of the present disclosure, in the method of example 2 according to example 1, the displaying a first search result on a search results page, includes:
displaying a video card of the target event in the first page region of the search results page, and displaying the first search result in the second page region of the search results page.

According to one or more embodiments of the present disclosure, in the method of example 3 according to example 2, a width of the first page region is associated with a width of the search results page; and a height of the first page region is associated with a height of the video card.

According to one or more embodiments of the present disclosure, in the method of example 4 according to example 1, the displaying a video card of the target event in the first page region of the search results page, includes:
displaying the video card of the target event in the first page region of the search results page, and playing a target video in a first card region of the video card, wherein the target video corresponds to event state information of the target event.

According to one or more embodiments of the present disclosure, in the method of example 5 according to example 2, the video card includes at least one of a second card region, a third card region, and a fourth card region; the second card region is used for exhibiting sub-event state information of at least one sub-event in the preset event; the third card region is used for exhibiting object information of at least one associated object of the preset event; and the fourth card region is used for exhibiting associated prompt information of the target event.

According to one or more embodiments of the present disclosure, in the method of example 6 according to example 5, the displaying the video card of the target event in the first page region of the search results page, the method further includes at least one of the following:
displaying live information of the target sub-event corresponding to the target sub-event state information, in response to a trigger operation for the target sub-event state information;
displaying object details of a target associated object corresponding to target object information, in response to a trigger operation for the target object information.

According to one or more embodiments of the present disclosure, in the method of example 7 according to example 5, the object information includes an object image, and after the displaying the video card of the target event in the first page region of the search results page, the method further includes:
adjusting a display size of the target object image, in response to a trigger operation of moving a cursor into a display region where the target object image is located.

According to one or more embodiments of the present disclosure, in the method of example 8 according to any one of examples 1-7.

According to one or more embodiments of the present disclosure, in example 9 according to example 8, the search results page further displays a preset page component; and a component background of the preset page component is associated with a page background in a current display position of the preset page component.

According to one or more embodiments of the present disclosure, in the method of example 10 according to any one of examples 1-9, the displaying a first page region of the search results page as a first page background, and displaying a second page region of the search results page as a second page background, includes:
overlaying a target background layer on top of an original background layer of the search results page, wherein the second page background is displayed within the original background layer, the first page background is displayed within the target background layer, and a size of the target background layer fits a size of the first page region.

According to one or more embodiments of the present disclosure, in the method of example 11 according to example 10, the target background layer includes a first background layer and a second background layer; and the overlaying a target background layer on top of an original background layer of the search results page, includes:
overlaying the first background layer on top of the original background layer of the search results page, and overlaying the second background layer on top of the first background layer, wherein the first background layer and the second background layer display different background colors, a size of the first background layer fits the size of the first page region, and a size of the second background layer is less than or equal to the size of the first background layer.

According to one or more embodiments of the present disclosure, the method of example 12 according to any one of examples 1-7, further includes: in response to a second search operation for second information to be searched, displaying a second search result on the search results page, and displaying the search results page as the second page background, wherein the second information to be searched is different from the first information to be searched, and the second search result matches the second information to be searched.

According to one or more embodiments of the present disclosure, example 13 provides an apparatus of page displaying, including:
a receiving module, configured to receive a first search operation for first information to be searched, wherein the first information to be searched is associated with a target event, and the target event includes a preset event and/or a target sub-event of the preset event; and
a responding module, configured to in response to the first search operation, display a first search result on a search results page, display a first page region of the search results page as a first page background, and display a second page region of the search results page as a second page background, wherein the first search result matches the first information to be searched.

According to one or more embodiments of the present disclosure, example 14 provides an electronic device, including:
one or more processors; and
a memory, storing one or more programs.

When the one or more programs is executed by the one or more processors, the one or more processors implement the method of page displaying according to any one of examples 1 to 12.

According to one or more embodiments of the present disclosure, example 15 provides a computer readable storage medium. The computer readable storage medium has computer programs stored thereon, and the computer programs, when executed by a processor, implement the method of page displaying according to any one of examples 1 to 12.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate subcombination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims. Specific manners of operations performed by the modules in the apparatus in the above embodiment have been described in detail in the embodiments regarding the method, which will not be explained and described in detail herein again.

## Claims

1. A method of page displaying, comprising:
receiving a first search operation for first information to be searched, wherein the first information to be searched is associated with a target event, and the target event comprises a preset event and/or a target sub-event of the preset event;
in response to the first search operation, displaying a first search result on a search results page, displaying a first page region of the search results page as a first page background, and displaying a second page region of the search results page as a second page background, wherein the first search result matches the first information to be searched.

2. The method according to claim 1, wherein the displaying a first search result on a search results page, comprises:
displaying a video card of the target event in the first page region of the search results page, and displaying the first search result in the second page region of the search results page.

3. The method according to claim 2, wherein a width of the first page region is associated with a width of the search results page; and a height of the first page region is associated with a height of the video card.

4. The method according to claim 2 or 3, wherein the displaying a video card of the target event in the first page region of the search results page, comprises:
displaying the video card of the target event in the first page region of the search results page, and playing a target video in a first card region of the video card, wherein the target video corresponds to event state information of the target event.

5. The method according to any one of claims 2 to 4, wherein the video card comprises at least one of a second card region, a third card region, and a fourth card region; the second card region is used for exhibiting sub-event state information of at least one sub-event in the preset event; the third card region is used for exhibiting object information of at least one associated object of the preset event; and the fourth card region is used for exhibiting associated prompt information of the target event.

6. The method according to claim 5, wherein after the displaying the video card of the target event in the first page region of the search results page, the method further comprises at least one of the following:
displaying live information of the target sub-event corresponding to the target sub-event state information, in response to a trigger operation for the target sub-event state information;
displaying object details of a target associated object corresponding to target object information, in response to a trigger operation for the target object information.

7. The method according to claim 5, wherein the object information comprises an object image, and after the displaying the video card of the target event in the first page region of the search results page, the method further comprises:
adjusting a display size of the target object image, in response to a trigger operation of moving a cursor into a display region where the target object image is located.

8. The method according to any one of claims 1 to 7, wherein the search results page further displays a preset page component; and a component background of the preset page component is associated with a page background in a current display position of the preset page component.

9. The method according to claim 8, further comprising:
in response to a page content switch operation, controlling the first search result and the page background of the search results page to move and updating the component background of the preset page component based on the page background in the current display position of the preset page component, wherein the display position of the preset page component on a screen remains unchanged.

10. The method according to any one of claims 1 to 7, wherein the displaying a first page region of the search results page as a first page background, and displaying a second page region of the search results page as a second page background, comprises:
overlaying a target background layer on top of an original background layer of the search results page, wherein the second page background is displayed within the original background layer, the first page background is displayed within the target background layer, and a size of the target background layer fits a size of the first page region.

11. The method according to claim 10, wherein the target background layer comprises a first background layer and a second background layer; and the overlaying a target background layer on top of an original background layer of the search results page, comprises:
overlaying the first background layer on top of the original background layer of the search results page, and overlaying the second background layer on top of the first background layer, wherein the first background layer and the second background layer display different background colors, a size of the first background layer fits the size of the first page region, and a size of the second background layer is less than or equal to the size of the first background layer.

12. The method according to any one of claims 1 to 11, further comprising:
in response to a second search operation for second information to be searched, displaying a second search result on the search results page, and displaying the search results page as the second page background, wherein the second information to be searched is different from the first information to be searched, and the second search result matches the second information to be searched.

13. An apparatus of page displaying, comprising:
a receiving module, configured to receive a first search operation for first information to be searched, wherein the first information to be searched is associated with a target event, and the target event comprises a preset event and/or a target sub-event of the preset event; and
a responding module, configured to in response to the first search operation, display a first search result on a search results page, display a first page region of the search results page as a first page background, and display a second page region of the search results page as a second page background, wherein the first search result matches the first information to be searched.

14. An electronic device, comprising:
at least one processor; and
a memory in communicative connection with the at least one processor; wherein
the memory stores a computer program executable by the at least one processor, and the computer program is executed by the at least one processor, so that the at least one processor is capable of executing the method of page displaying according to any one of claims 1 to 12.

15. A computer readable storage medium, wherein the computer readable storage medium has computer instructions stored thereon, and the computer instructions, when executed by a processor, implement the method of page displaying according to any one of claims 1 to 12.
